# EUROPEAN PATENT APPLICATION

(11) **EP 3 863 224 A1**
(43) Date of publication of application: **11.08.2021**
(21) Application number: 21152042.4
(22) Date of filing: 18.01.2021
(51) Int. Cl.: H04L 12/24, H04L 12/26

(54) **DIAGRAM GENERATION METHOD AND DIAGRAM GENERATION PROGRAM**

(30) Priority: 10.02.2020 JP 2020020787
(71) Applicant: FUJITSU LIMITED, Kanagawa 211-8588 (JP)
(72) Inventor: Takano, Yosuke, Kanagawa, 211-8588 (JP); Oguchi, Naoki, Kanagawa, 211-8588 (JP); Noro, Masaaki, Kanagawa, 211-8588 (JP); Higuchi, Junichi, Kanagawa, 211-8588 (JP)
(74) Representative: Hoffmann Eitle

(57) **Abstract**

A diagram generation method executed by a computer includes acquiring, from each of a plurality of communication devices, device information including identification information set in a first network interface existing on a first network; identifying an internet protocol (IP) address set in a second network interface existing in a second network, the second network interface being included in a communication device which acquires the device information; store, in a memory, linked information in which the acquired device information and the IP address are associated with each other; and generating a network configuration diagram in which each of the plurality of communication devices sharing the IP address is an individual communication device by using the linked information.

## Description

### FIELD

The embodiment discussed herein is related to a diagram generation method and a diagram generation program.

### BACKGROUND

In recent years, large-scale network failures caused by incorrect settings in network devices have become major problems. For example, a large-scale network failure has occurred in 2017 due to incorrect settings for Border Gateway Protocol (BGP).

Once a large-scale network failure occurs, it may take a long time to identify the cause of the failure. Many users in multiple countries may suffer damage from the failure. The cost of damage to a data center due to the occurrence of the failure may be large.

Therefore, a technique for monitoring settings of network devices and checking consistency to inhibit the stop of a network has been requested.

For example, a network verification technique for plotting settings (routing, a VLAN, a VXLAN, and the like) of network devices on a graph and checking end-to-end reachability of each network is known. The VLAN is an abbreviation for virtual local area network. The VXLAN is an abbreviation for virtual extensible local area network.

The network verification technique collects, from each of routers set in the networks, a forwarding information base (FIB), interface information, and the like. The FIB is a table storing route information.

Based on the routing information described in the FIB, a forwarding graph indicating a route extending from a source node (Src) to a destination node (Dst) is generated for a network composed of a plurality of nodes.

The consistency of the network is verified by checking packet reachability and the presence or absence of a loop for the generated forwarding graph. As related techniques, International Publication Pamphlet No. WO 2011/037104, Japanese Laid-open Patent Publication No. 2017-229027, Japanese Laid-open Patent Publication No. 2004-266874, Japanese Laid-open Patent Publication No. 2018-46549, and the like are disclosed.

### SUMMARY

### [TECHNICAL PROBLEM]

In recent years, anycast that is a communication method is known. In the communication method, a plurality of network devices share the same Internet Protocol (IP) address and a network device that is the closest to a terminal is automatically selected as a destination of data in a specific service.

In a case in which the same IP address that is an anycast virtual extensible local area network tunnel end point (VTEP) IP address exists in different network devices, the plurality of devices having the anycast IP address are represented as one node.

In this case, consistency may be verified by multi-path propagation. However, when attention is paid to the anycast VTEP IP address, a route via which a packet passes and a device via which the packet passes are not found. Therefore, there is a problem that it is difficult to verify the consistency of each route.

According to an aspect, the present disclosure aims to generate a network configuration diagram in which a plurality of communication devices are treated as individual devices even when the same IP address is set in the plurality of communication devices.

### [SOLUTION TO PROBLEM]

According to an aspect of the embodiments, A diagram generation method executed by a computer includes acquiring, from each of a plurality of communication devices, device information including identification information set in a first network interface existing on a first network; identifying an internet protocol (IP) address set in a second network interface existing in a second network, the second network interface being included in a communication device which acquires the device information; store, in a memory, linked information in which the acquired device information and the IP address are associated with each other; and generating a network configuration diagram in which each of the plurality of communication devices sharing the IP address is an individual communication device by using the linked information.

### BRIEF DESCRIPTION OF DRAWINGS

FIG. 1 is a diagram schematically illustrating a configuration of a network management system as an example of an embodiment;
FIG. 2 is a diagram exemplifying a configuration of a network to be managed by the network management system as the example of the embodiment;
FIG. 3 is a diagram exemplifying route information in the network management system as the example of the embodiment;
FIG. 4 is a diagram exemplifying interface information in the network management system as the example of the embodiment;
FIG. 5 is a diagram exemplifying a routing information storage table in the network management system as the example of the embodiment;
FIG. 6 is a diagram exemplifying an interface information storage table in the network management system as the example of the embodiment;
FIG. 7 is a diagram exemplifying a route association information storage table in the network management system as the example of the embodiment;
FIG. 8 is a diagram describing a method for generating the route association information storage table by a route information extender in the network management system as the example of the embodiment;
FIG. 9 is a diagram describing a procedure for generating extended IP address information in the network management system as the example of the embodiment;
FIG. 10 is a sequence diagram describing a process in the network management system as the example of the embodiment;
FIG. 11 is a flowchart describing a process by a verifying server of the network management system as the example of the embodiment;
FIG. 12 is a diagram describing effects of the network management system as the example of the embodiment;
FIG. 13 is a diagram illustrating an example in which consistency is verified for a forwarding graph generated by an existing method;
FIG. 14 is a diagram illustrating an example in which a consistency checker verifies consistency for a forwarding graph generated by the network management system as the example of the embodiment; and
FIG. 15 is a diagram exemplifying a hardware configuration of the verifying server as an example of the embodiment.

### [ADVANTAGEOUS EFFECTS OF INVENTION]

In one aspect, it is desirable to generate a network configuration diagram in which a plurality of communication devices are treated as individual devices even when the same IP address is set in the communication devices.

### DESCRIPTION OF EMBODIMENTS

Hereinafter, an embodiment of a method for generating a network configuration diagram and a network configuration diagram generation program is described with reference to the drawings. The following embodiment, however, is merely an example and does not intend to exclude application of various modifications and techniques that are not explicitly described in the embodiment. For example, the embodiment may be implemented by making various modifications (combinations of the embodiment and the modifications and the like) to the embodiment without departing from the gist of the embodiment. The drawings do not indicate that only constituent components illustrated in the drawings are provided. The drawings indicate that other functions and the like may be included.

### (A) Configurations

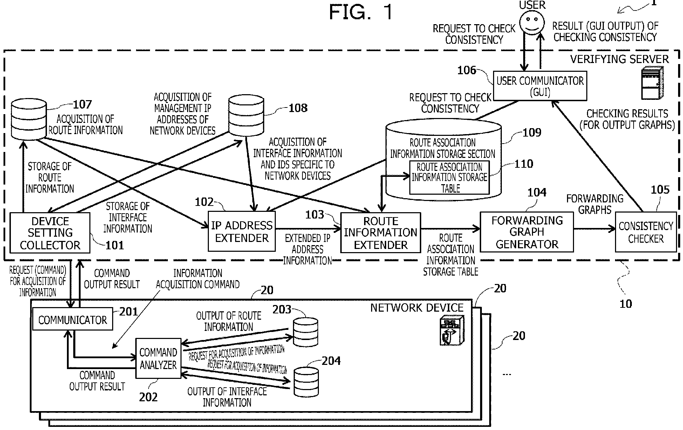

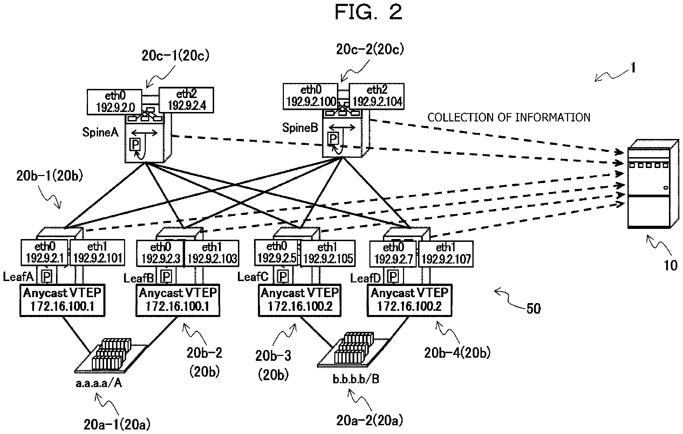

FIG. 1 is a diagram schematically illustrating a configuration of a network management system 1 as an example of the embodiment. FIG. 2 is a diagram exemplifying a configuration of a network 50 to be managed by the network management system 1.

The network 50 exemplified in FIG. 2 includes end networks 20a-1 and 20a-2, leaf switches 20b-1 to 20b-4, and spine switches 20c-1 and 20c-2 and is configured as a spine-leaf network.

When the end networks 20a-1 and 20a-2 are not particularly distinguished, the end networks 20a-1 and 20a-2 are hereinafter referred to as end networks 20a in some cases. When the leaf switches 20b-1 to 20b-4 are not particularly distinguished, the leaf switches 20b-1 to 20b-4 are hereinafter referred to as leaf switches 20b in some cases. When the spine switches 20c-1 and 20c-2 are not particularly distinguished, the spine switches 20c-1 and 20c-2 are hereinafter referred to as spine switches 20c in some cases.

The leaf switches 20b-1, 20b-2, 20b-3, and 20b-4 are hereinafter also referred to as Leaf A, Leaf B, Leaf C, and Leaf D, respectively, in some cases. The spine switch 20c-1 is hereinafter also referred to as Spine A in some cases. The spine switch 20c-2 is also referred to as Spine B in some cases.

In the network 50 exemplified in FIG. 2, an anycast VTEP IP address "172.16.100.1" is set in the leaf switch 20b-1 (Leaf A) and the leaf switch 20b-2 (Leaf B). An anycast VTEP IP address "172.16.100.2" is set in the leaf switch 20b-3 (Leaf C) and the leaf switch 20b-4 (Leaf D).

In the spine-leaf network 50 exemplified in FIG. 2, the side on which an edge layer including the end networks 20a-1 and 20a-2 exists is referred to as a lower network side, and the side on which a spine layer including the spine switches 20c-1 and 20c-2 exists is referred to as an upper network side.

A verifying server 10 is coupled to the network 50 and executes consistency verification on the network 50.

### [Network Devices]

The leaf switches 20b and spine switches 20c are network devices constituting the network 50. The network 50 is built as a two-layer network including the leaf switches 20b and spine switches 20c.

A node, such as a server, is coupled to the leaf switches 20b and is not coupled to the spine switches 20c. The spine switches 20c transfer traffic. In the foregoing configuration, switching roles are shared between the leaf switches 20b and the spine switches 20c in the network 50.

The end network 20a-1 is coupled to each of the leaf switches 20b-1 and 20b-2. The end network 20a-2 is coupled to each of the leaf switches 20b-3 and 20b-4.

The leaf switch 20b-1 includes interfaces eth0 and eth1. An IP address "192.9.2.1" is set in the interface eth0 of the leaf switch 20b-1. An IP address "192.9.2.101" is set in the interface eth1 of the leaf switch 20b-1.

The leaf switch 20b-2 includes interfaces eth0 and eth1. An IP address "192.9.2.3" is set in the interface eth0 of the leaf switch 20b-2. An IP address "192.9.2.103" is set in the interface eth1 of the leaf switch 20b-2.

The leaf switch 20b-3 includes interfaces eth0 and eth1. An IP address "192.9.2.5" is set in the interface eth0 of the leaf switch 20b-3. An IP address "192.9.2.105" is set in the interface eth1 of the leaf switch 20b-3.

The leaf switch 20b-4 includes interfaces eth0 and eth1. An IP address "192.9.2.7" is set in the interface eth0 of the leaf switch 20b-4. An IP address "192.9.2.107" is set in the interface eth1 of the leaf switch 20b-4.

Each of the leaf switches 20b is coupled to the spine switches 20c-1 and 20c-2.

The spine switch 20c-1 includes interfaces eth0 and eth2. An IP address "192.9.2.0" is set in the interface eth0 of the spine switch 20c-1. An IP address "192.9.2.4" is set in the interface eth2 of the spine switch 20c-1.

The spine switch 20c-2 includes interfaces eth0 and eth2. An IP address "192.9.2.100" is set in the interface eth0 of the spine switch 20c-2. An IP address "192.9.2.104" is set in the interface eth2 of the spine switch 20c-2.

For example, the interfaces eth0 and eth1 included in the leaf switches 20b-1 to 20b-4 and coupled to the spine switches 20c are interfaces on the upper network side, and anycast VTEPs included in the leaf switches 20b-1 to 20b-4 and coupled to the end networks 20a are interfaces on the lower network side.

When the leaf switches 20b and the spine switches 20c are not particularly distinguished, the leaf switches 20b and the spine switches 20c are hereinafter referred to as network devices 20 in some cases.

As illustrated in FIG. 1, each of the network devices 20 includes a communicator 201, a command analyzer 202, an operating route information database (DB) 203, and an interface (IF) bridge information DB 204.

The operating route information DB 203 stores route information of a route operating on a data plane (hardware) of the network device (concerned network device) 20 including the concerned operating route information DB 203. The operating route information DB 203 may store the route information in a table data format or another format.

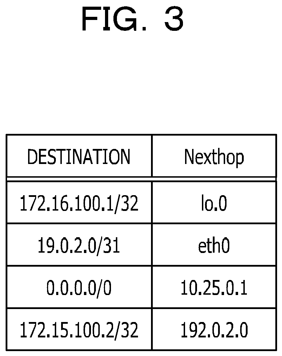

FIG. 3 is a diagram exemplifying the route information in the network management system 1 as the example of the embodiment.

The route information exemplified in FIG. 3 is configured as a table in which Destination is associated with Nexthop. The route information indicates that data may be output to output destinations indicated in Nexthop and may be transmitted to destinations indicated in Destination. The operating route information DB 203 functions as a route information manager that manages the route information. The operating route information DB 203 may respond to an information acquisition command issued by the command analyzer 202 (described later) and transmit (send a reply indicating) the route information.

The IF bridge information DB 204 stores interface information on interfaces (physical and virtual interfaces) of the network device (concerned network device) 20 including the concerned IF bridge information DB 204. The IF bridge information DB 204 may store the interface information in a table data format or another format other than a table.

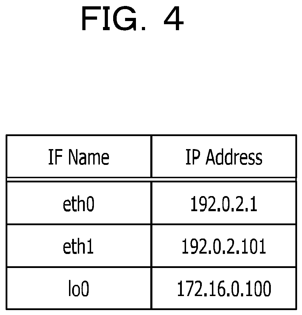

FIG. 4 is a diagram exemplifying the interface information in the network management system 1 as the example of the embodiment.

The interface information exemplified in FIG. 4 is configured as a table in which IP Name is associated with IP Address. IP Name indicates information identifying the interfaces included in the concerned network device 20. The interfaces include the physical interface and the virtual (logical) interface. Each IP address indicated in IP Address is an IP address of the physical interface or an IP address of the virtual interface (bridge).

Each of the network devices 20 includes an ID specific to the concerned network device 20. The specific ID may be an IP address of a specific network interface card (NIC) included in the network device 20. When the network device 20 includes a plurality of NICs, an NIC included in an interface on the upper network side when the network 50 is represented as a tree structure as exemplified in FIG. 2 may be used as the ID specific to the concerned network device 20.

In the embodiment, IP addresses of the interfaces eth0 of the network devices 20 are used as the IDs specific to the network devices 20. The IF bridge information DB 204 stores, as the ID specific to the concerned network device 20, an IP address of the interface eth0 included in the concerned network device 20.

The IF bridge information DB 204 may store not only the interface information but also a link-up status or the like. The IF bridge information DB 204 functions as an interface information manager that manages the interface information. The IF bridge information DB 204 may respond to an information acquisition command issued by the command analyzer 202 and transmit (send a reply indicating) the interface information.

The route information of the network devices 20 and the interface information of the network devices 20 are hereinafter referred to as network device information in some cases. The network device information may include the IDs specific to the network devices 20.

The communicator 201 communicates with a device setting collector 101 of the verifying server 10 (described later). The communicator 201 receives, from the device setting collector 101, a command requesting the acquisition of the network device information and transfers the command (information acquisition command) requesting the acquisition of the network device information to the command analyzer 202.

The communicator 201 receives a command output result (indicating the network device information including the interface information and the route information, and the like) transmitted from the command analyzer 202 and transfers the command output result to the device setting collector 101.

The command analyzer 202 analyzes the command requesting the acquisition of the information and transferred by the communicator 201 and issues a command requesting the acquisition of the information to the operating route information DB 203 and the IF bridge information DB 204. The command analyzer 202 receives the route information output from the operating route information DB 203 and the interface information output from the IF bridge information DB 204 and transfers the network device information including the received route information and the received interface information to the communicator 201. The network device information includes an FIB. The FIB corresponds to setting information of a routing table.

### [Verifying Server 10]

The verifying server 10 executes the consistency verification on the network 50 exemplified in FIG. 2. For example, the verifying server 10 collects the network device information (interface information and route information) from the network devices (leaf switches 20b and spine switches 20c) included in the network 50 and executes the consistency verification on the network 50.

As illustrated in FIG. 1, the verifying server 10 includes functions as the device setting collector 101, an IP address extender 102, a route information extender 103, a forwarding graph generator 104, a consistency checker 105, a user communicator 106, a route information table DB 107, a route association information storage section 109, and an IF/network device ID DB 108.

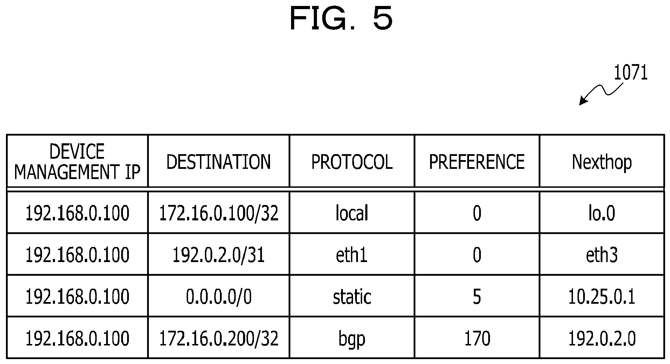

The route information table DB 107 stores a routing information storage table 1071 (refer to FIG. 5). The routing information storage table 1071 is information to be used to manage one or more routes included in the network 50. The routing information storage table 1071 is used to manage information of routes coupled to the network devices 20 for each of the network devices 20 included in the network 50. For example, in the routing information storage table 1071, a plurality of routes, each of which extends from any one of the network devices 20 as a start point or extends to any one of the network devices 20 as an end point, are registered.

FIG. 5 is a diagram exemplifying the routing information storage table 1071 in the network management system 1 as the example of the embodiment.

The routing information storage table 1071 exemplified in FIG. 5 includes, as items, Device Management IP, Destination, Protocol, Preference, and Nexthop. For example, the routing information storage table 1071 is configured so that Destination, Protocol, Preference, and Nexthop are associated with Device Management IP.

Device Management IP indicates management IP addresses of the network devices 20. Destination is information indicating destination addresses of packets and destination networks of the packets.

Protocol indicates routing protocols of the routes. In Protocol, not only information indicating the protocols, such as static and bgp, but also local and direct may be set. Local is set when the same IP address as that of a destination indicated in Destination exists in the same network device 20. Direct is set when another destination device indicated in Destination is directly coupled to an interface within the same network device 20.

Preference indicates priorities corresponding to the routing protocols. In Preference, a default value is set for each of vendors of the network devices 20. Nexthop indicates next hops.

The routing information storage table 1071 includes the route information collected from the network devices 20. The route information includes information of the VTEPs.

The route information stored in the route information table DB 107 is read in accordance with requests from the IP address extender 102 (described later) and the route information extender 103 (described later) and is provided to the IP address extender 102 and the route information extender 103.

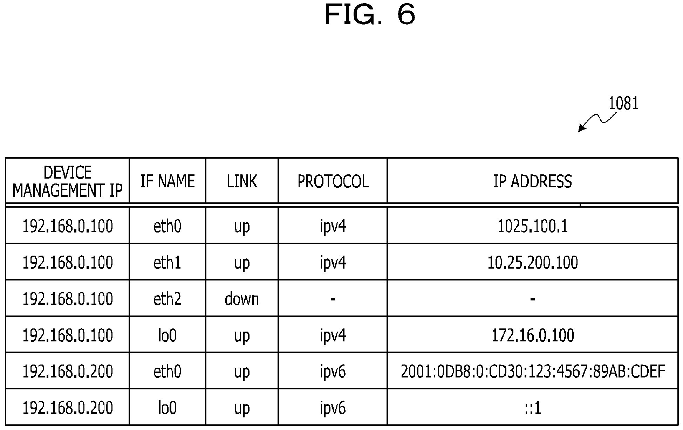

The IF/network device ID DB 108 stores an interface information storage table 1081 (refer to FIG. 6). The interface information storage table 1081 is information of the interfaces of the network devices 20 included in the network 50.

FIG. 6 is a diagram exemplifying the interface information storage table 1081 in the network management system 1 as the example of the embodiment.

The interface information storage table 1081 exemplified in FIG. 6 includes, as items, Device Management IP, IF Name, Link, Protocol, and IP Address. For example, the interface information storage table 1081 is configured so that IF Name, Link, Protocol, and IP Address are associated with Device Management IP.

Device Management IP indicates the management IP addresses of the network devices 20. IF Name indicates names (interface names) of the interfaces included in the network devices 20. The interfaces include both physical interfaces and virtual interfaces.

Link indicates coupling states of the interfaces. In the example illustrated in FIG. 6, up indicates that interfaces are being coupled, and down indicates that an interface is not being coupled.

Protocol indicates protocol types of the IP addresses of the interfaces. In the example illustrated in FIG. 6, either ipv4 or ipv6 is set for each of the coupled interfaces. IP Address indicates IP addresses given to the interfaces identified in IF Name.

The interface information storage table 1081 includes the interface information collected from the network devices 20.

The interface information stored in the interface information storage table 1081 is read in accordance with requests from the device setting collector 101 (described later) and the IP address extender 102 (described later) and is provided to the device setting collector 101 and the IP address extender 102.

The IF/network device ID DB 108 is used to manage the IDs specific to the network devices 20. The IDs specific to the network devices 20 are identification information uniquely identifying the network devices 20 and are preferably set in advance. For example, the IDs specific to the networks 20 may be IP addresses set in primary interfaces among the plurality of interfaces included in the network device 20.

The route association information storage section 109 stores a route association information storage table 110. The route association information storage table 110 includes extended IP address information (device setting information) obtained by adding the IDs specific to the network devices 20 to the IP addresses of the network devices 20.

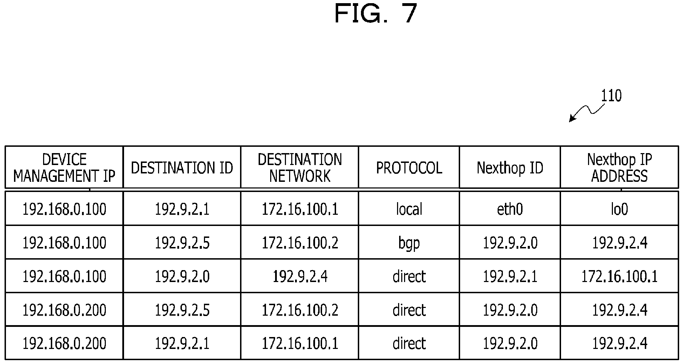

FIG. 7 is a diagram exemplifying the route association information storage table 110 in the network management system 1 as the example of the embodiment.

The route association information storage table 110 exemplified in FIG. 7 includes, as items, Device Management IP, Destination ID, Destination Network, Protocol, Nexthop ID, and Nexthop IP Address. For example, the route association information storage table 110 is configured so that Destination ID, Destination Network, Protocol, Nexthop ID, and Nexthop IP Address are associated with Device Management IP.

Device Management IP indicates the management IP addresses of the network devices 20. Destination ID indicates IDs (identification information) identifying network devices 20 having destination addresses of packets and destination networks of the packets. The IDs indicated in Destination ID may be IP addresses or interface names of the other interfaces included in the network devices 20 or may be host names of the network devices 20. The IDs indicated in Destination ID may be the IDs specific to the network devices 20.

Destination Network indicates the destination addresses of the packets and the destination networks of the packets. Protocol indicates the routing protocols and is the same as or similar to Protocol of the foregoing routing information storage table 1071.

Nexthop ID indicates IDs identifying network devices 20 having IP addresses of next hops and is the same as or similar to Destination ID. Nexthop IP Address indicates the IP addresses of the next hops.

The route association information storage table 110 is generated by the route information extender 103 (described later).

A combination of Destination ID and Destination Network that are included in the route association information storage table 110 functions as the extended IP address information (device setting information). The information (combination of Destination ID and Destination Network) constituting the extended IP address information is generated by the IP address extender 102 (described later) and is given to the route information extender 103.

The data of the route association information storage table 110 is read by the forwarding graph generator 104 (described later) and is used to generate a forwarding graph.

The device setting collector 101 acquires the network device information from the network devices 20. The device setting collector 101 may issue a command requesting the acquisition of information via the communicators 201 of the network devices 20 and acquire the network device information. The device setting collector 101 issues a command requesting the acquisition of the route information to the communicators 201 of the network devices 20 and acquires the route information from the network devices 20. The device setting collector 101 issues a command requesting the acquisition of the interface information to the communicators 201 of the network devices 20 and acquires the interface information from the network devices 20.

The device setting collector 101 causes the acquired route information to be stored in the route information table DB 107 and causes the acquired interface information to be stored in the IF/network device ID DB 108.

To access the network devices 20, the device setting collector 101 acquires information of the management IP addresses of the network devices 20 from the IF/network device ID DB 108.

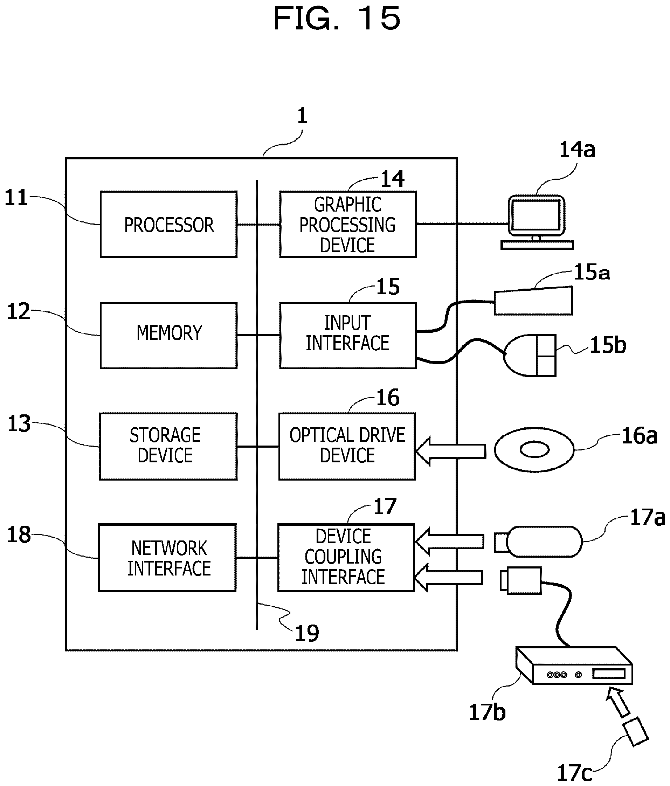

For example, a user uses input devices, such as a keyboard 15a and a mouse 15b (refer to FIG. 15), to enter a request for the consistency verification in the network management system 1. The request for the consistency verification may be performed via a graphical user interface (GUI) displayed on a monitor 14a (refer to FIG. 15).

The user communicator 106 receives the request entered by the user for the consistency verification and transfers the request for the consistency verification to the IP address extender 102.

The user communicator 106 receives a result of the consistency verification by the consistency checker 105 (described later) and forwarding graph information generated by the forwarding graph generator 104 (described later) and displays the received result and the received information on the monitor 14a via the displayed GUI. Therefore, the user communicator 106 notifies the result of the consistency verification and the forwarding graph information to the user.

The IP address extender 102 generates the extended IP address information by extending the IP addresses of the network devices 20 using the IDs specific to the network devices 20.

The IP address extender 102 acquires the routing information storage table 1071 and information of FIBs of the network devices 20 from the route information table DB 107 in accordance with the consistency verification request received by the user communicator 106 from the user. The IP address extender 102 acquires the interface information storage table 1081, the setting information of the VTEPs, and the like from the IF/network device ID DB 108.

The IP address extender 102 uses the routing information storage table 1071 and the interface information storage table 1081 to generate the extended IP address information by extending the IP addresses of the network devices 20 using the IDs specific to the network devices 20. For example, the IP address extender 102 generates the extended IP address information by combining the IP addresses of the network devices 20 with the IDs specific to the network devices 20.

The IP address extender 102 gives the generated extended IP address information to the route information extender 103. For example, the IP address extender 102 causes the generated extended IP address information to be stored in a predetermined storage region of a memory 12 (refer to FIG. 15), thereby giving the extended IP address information to the route information extender 103. Giving data is hereinafter referred to as transmitting data in some cases.

The route information extender 103 generates the route association information storage table 110 by extending a route information table based on the routing information storage table 1071 acquired from the route information table DB 107 and the extended IP address information acquired from the IP address extender 102.

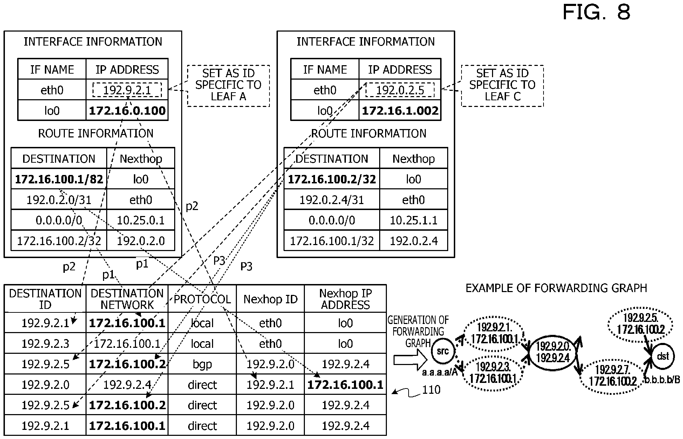

FIG. 8 is a diagram describing a method for generating the route association information storage table 110 by the route information extender 103 in the network management system 1 as the example of the embodiment.

FIG. 8 illustrates an example in which the route association information storage table 110 is generated from the interface information of Leaf A and Leaf C and the route information of Leaf A and Leaf C.

For example, the IP address extender 102 extracts the anycast VTEP IP address "172.16.100.1" from Destination of the route information of Leaf A and gives the extracted anycast VTEP IP address "172.16.100.1" to the route information extender 103. The route information extender 103 sets the received anycast VTEP IP address "172.16.100.1" in Destination Network of the route association information storage table 110 (refer to reference sign P1). The IP address extender 102 acquires the ID specific to Leaf A (network device 20) from the interface information of Leaf A. In the example illustrated in FIG. 8, the IP address "192.9.2.1" of the interface "eth0" of Leaf A is treated as the ID specific to Leaf A.

The IP address extender 102 reads the IP address "192.9.2.1" of the interface "eth0" and gives the read IP address "192.9.2.1" to the route information extender 103. The route information extender 103 treats the received IP address "192.9.2.1" of the interface "eth0" of Leaf A as the ID specific to Leaf A, associates the IP address "192.9.2.1" with the anycast VTEP IP address "172.16.100.1", and sets the IP address "192.9.2.1" in Destination ID of the route association information storage table 110 (refer to reference sign P2).

For example, the IP address extender 102 extracts the anycast VTEP IP address "172.16.100.2" from Destination of the route information of Leaf C and gives the extracted anycast VTEP IP address "172.16.100.2" to the route information extender 103. The route information extender 103 sets the received anycast VTEP IP address "172.16.100.2" in Destination Network of the route association information storage table 110 (refer to reference sign P3). The IP address extender 102 extracts the IP address of the interface of Leaf C from the interface information of Leaf C and gives the extracted IP address to the route information extender 103. The route information extender 103 treats the received IP address of the interface of Leaf C as the ID specific to Leaf C, associates the received IP address with the anycast VTEP IP address "172.16.100.2", and sets the IP address in Destination ID of the route association information storage table 110 (refer to reference sign P4).

In the foregoing manner, the route information extender 103 generates the route association information storage table 110 and completes the route association information storage table 110 using information acquired from the FIBs of the network devices 20 and the like.

In the route association information storage table 110 generated in the foregoing manner, a combination of Destination ID and Destination Network corresponds to the extended IP address information.

The route information extender 103 gives the generated route association information storage table 110 to the forwarding graph generator 104. For example, the route information extender 103 causes the generated route association information storage table 110 to be stored in a predetermined storage region of the memory 12 (refer to FIG. 15), thereby giving the route association information storage table 110 to the forwarding graph generator 104.

The route information extender 103 updates the route information using the extended IP address information generated by the IP address extender 102.

For example, the route information extender 103 replaces IP addresses registered in Dst and Nexthop of the FIBs of the network devices 20 with the extended IP address information generated by the IP address extender 102.

The forwarding graph generator 104 generates forwarding graphs using information acquired from the route association information storage table 110.

The forwarding graph generator 104 generates the forwarding graphs using, as a single node, each of combinations of destination IDs indicated in Destination ID of the route association information storage table 110 and IP addresses indicated in Destination Network of the route association information storage table 110. Various known methods, such as a method using Delta-net and disclosed in Japanese Laid-open Patent Publication No. 2018-46549, may be used to generate the forwarding graphs, and will not be described.

The forwarding graph generator 104 gives the generated forwarding graphs to the consistency checker 105. For example, the forwarding graph generator 104 causes the generated forwarding graphs to be stored in a predetermined storage region of the memory 12 (refer to FIG. 15), thereby giving the forwarding graphs to the consistency checker 105.

The consistency checker 105 verifies whether there is end-to-end consistency (reachability of a packet) for all the forwarding graphs received from the forwarding graph generator 104. The verification of the consistency of the packet may be achieved using a known method and will not be described.

The consistency checker 105 checks whether there is the consistency according to results of the verification. The consistency checker 105 transmits information of the final forwarding graphs to the user communicator 106.

### (B) Operations

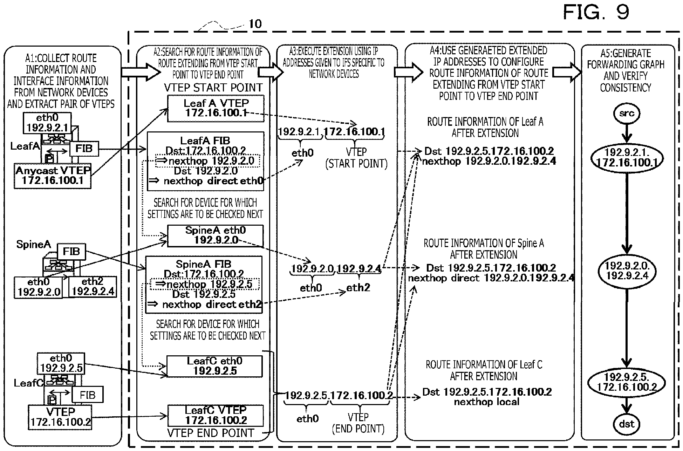

A procedure for generating the extended IP address information in the network management system 1 configured in the foregoing fashion as the example of the embodiment is described with reference to FIG. 9.

In a procedure A1, the device setting collector 101 collects the route information and the interface information from the network devices 20, and the IP address extender 102 extracts a pair of VTEPs based on the collected information. In an example illustrated in FIG. 9, the anycast VTEP IP address "172.16.100.1" of the leaf switch 20b-1 (Leaf A) indicates a VTEP start point, and the anycast VTEP IP address "172.16.100.2" of the leaf switch 20b-3 (Leaf C) indicates a VTEP end point.

In each of the leaf switches 20b, the IP address of the anycast VTEP corresponds to an IP address set in an NIC on the lower network side, and the IP address of the interface eth0 corresponds to an IP address set in an NIC on the upper network side.

In each of the spine switches 20c, the IP address of the interface eth0 corresponds to an IP address set in an NIC on the upper network side. In each of the spine switches 20c, the IP address of the interface (eth2 in the example illustrated in FIG. 9) for which direct connect is set in Nexthop in the FIB corresponds to an IP address set in an NIC on the lower network side.

In a procedure A2, the IP address extender 102 references the collected route information and searches for route information of a route extending from the VTEP start point to the VTEP end point.

In the example illustrated in FIG. 9, the IP address of the VTEP start point is "192.16.100.1 (Leaf A)" and the IP address of the VTEP end point "172.16.100.2 (Leaf C)".

The IP address extender 102 acquires IP addresses of interfaces included in network devices 20 existing on the route extending from the VTEP start point to the VTEP end point in the network 50. The IP address extender 102 acquires the IDs specific to the network devices 20.

The IP address extender 102 references Nexthop indicated in the FIBs (forwarding information bases: route control tables) of the network devices 20 and identifies a network device 20 to which a packet is to be transferred next. The IP address extender 102 repeatedly references Nexthop indicated in the FIBs of the identified network devices 20 and determines the network devices 20 constituting the route via which the packet is to be transmitted.

In a procedure A3, the IP address extender 102 extends the IP addresses of the network devices 20 by adding the IDs specific to the network devices 20 to the IP addresses of the network devices 20. For example, the IP address extender 102 uses, as the IDs specific to the network devices 20, the IP addresses given to the interfaces specific to the network devices 20 to extend the IP addresses of the network devices 20, thereby generating the extended IP address information.

In the example illustrated in FIG. 9, the IP address extender 102 achieves the extension of the IP addresses by arranging the IP addresses of the network devices 20 so that the IP addresses of the networks 20 succeed the IP addresses given to the interfaces specific to the network devices 20.

For example, the IP address extender 102 generates extended IP address information "192.9.2.1.172.16.100.1" by arranging the IP address "192.9.2.1" of the interface eth0 of Leaf A so that the IP address "192.9.2.1" of the interface eth0 of Leaf A precedes the IP address "172.16.100.1" of Leaf A serving as the VTEP start point.

Similarly, the IP address extender 102 generates extended IP address information "192.9.2.5.172.16.100.2" by arranging the IP address "192.9.2.5" of the interface eth0 of Leaf C so that the IP address "192.9.2.5" of the interface eth0 of Leaf C precedes the IP address "172.16.100.2" of Leaf C serving as the VTEP end point.

For the IP addresses other than the VTEP IP addresses, the IP address extender 102 generates extended IP address information by arranging the IP addresses of the interfaces eth0 of the network devices 20. For example, the IP address extender 102 generates extended IP address information "192.9.2.0.192.9.2.4" by arranging the IP address "192.9.2.0" of the interface eth0 of Spine A so that the IP address "192.9.2.0" of the interface eth0 of Spine A precedes the IP address "192.9.2.4" of the interface eth2 of Spine A.

In the example illustrated in FIG. 9, in the extended IP address information, periods (.) are arranged between the IP addresses given to the interfaces specific to the network devices 20 and the IP addresses of the network devices 20.

In a procedure A4, the route information extender 103 generates the route association information storage table 110 by extending the route information table based on the routing information storage table 1071 acquired from the route information table DB 107 and the extended IP address information acquired from the IP address extender 102.

The route information extender 103 updates the route information using the extended IP address information generated by the IP address extender 102.

The route information extender 103 replaces the IP addresses registered in Dst and Nexthop of the FIBs of the network devices 20 with the extended IP address information generated by the IP address extender 102.

In the example illustrated in FIG. 9, the route information extender 103 replaces "172.16.100.2" registered in Dst of the FIB of Leaf A with "192.9.2.5.172.16.100.2" and replaces "192.9.2.0" registered in Nexthop of the FIB of Leaf A with "192.9.2.0.192.9.2.4".

Similarly, the route information extender 103 replaces "172.16.100.2" registered in Dst of the FIB of Spine A with "192.9.2.5.172.16.100.2" and replaces the IP address "192.9.2.4" of the interface eth2 specified in Nexthop of the FIB of Spine A with "192.9.2.0.192.9.2.4".

The route information extender 103 replaces the IP address "172.16.100.2" of Leaf C serving as the VTEP end point with "192.9.2.5.172.16.100.2" registered in Dst.

In a procedure A5, the forwarding graph generator 104 generates a forwarding graph in which nodes are represented by the extended IP address information. The consistency checker 105 verifies consistency for the generated forwarding graph.

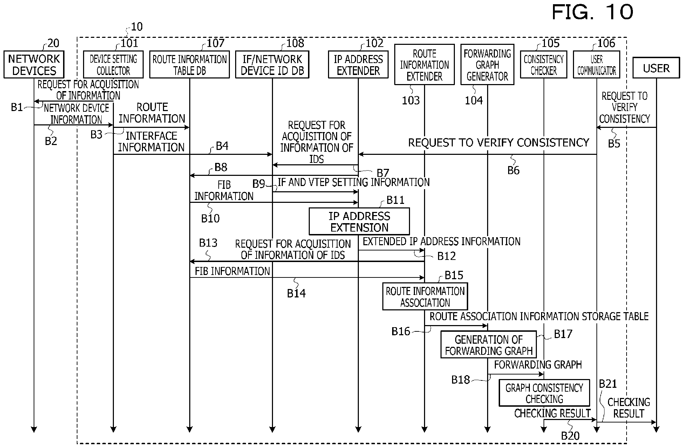

A process to be executed in the network management system 1 as the example of the embodiment is described below with reference to a sequence diagram illustrated in FIG. 10.

The device setting collector 101 transmits a request for the acquisition of the network device information to each of the network devices 20 (refer to reference sign B1). The network devices 20 transmit the network device information (interface information, route information, FIBs, and the like) of the network devices 20 to the device setting collector 101 in accordance with the request for the acquisition of the network device information (refer to reference sign B2).

The device setting collector 101 causes the collected route information to be stored in the route information table DB 107 (refer to reference sign B3). The device setting collector 101 causes the interface information to be stored in the IF/network device ID DB 108 (refer to reference sign B4). The interface information includes the information of the VTEPs.

The user enters a request to verify consistency via the input devices, such as the keyboard 15a and the mouse 15b (refer to reference sign B5). The user communicator 106 transmits the entered request to verify the consistency to the IP address extender 102 (refer to reference sign B6).

The IP address extender 102 issues a request for the acquisition of the interface information storage table 1081 and information of the IDs specific to the network devices 20 to the IF/network device ID DB 108 (refer to reference sign B7).

The IP address extender 102 issues a request for the acquisition of the routing information storage table 1071 to the route information table DB 107 (refer to reference sign B8).

The IF/network device ID DB 108 provides a response indicating the interface information storage table 1081, the setting information of the VTEPs, and the like to the IP address extender 102 (refer to reference sign B9). The route information table DB 107 provides a response indicating the routing information storage table 1071 and the information of the FIBs of the network devices 20 to the IP address extender 102 (refer to reference sign B10).

The IP address extender 102 uses the received information to combine the IDs specific to the network devices 20 with the IP addresses of the network devices 20, thereby generating the extended IP address information (refer to reference sign B11). The IP address extender 102 gives the generated extended IP address information to the route information extender 103 (refer to reference sign B12).

The route information extender 103 issues a request for the acquisition of the FIBs of the network devices 20 to the route information table DB 107 (refer to reference sign B13). The route information table DB 107 provides a response indicating the FIBs of the network devices 20 to the route information extender 103 (refer to reference sign B14).

The route information extender 103 updates the route information using the extended IP address information generated by the IP address extender 102. The route information extender 103 generates the route association information storage table 110 based on the routing information storage table 1071 acquired from the route information table DB 107, the extended IP address information acquired from the IP address extender 102, the FIBs of the network devices 20, and the like (refer to reference sign B15). The route information extender 103 gives the generated route association information storage table 110 to the forwarding graph generator 104 (refer to reference sign B16).

The forwarding graph generator 104 generates a forwarding graph using the extended IP address information included in the route information table DB 107 (refer to reference sign B17). The forwarding graph generator 104 gives the generated forwarding graph to the consistency checker 105 (refer to reference sign B18).

The consistency checker 105 checks consistency for the forwarding graph (refer to reference sign B19), notifies the result of the checking to the user via the user communicator 106 (refer to reference signs B20 and B21), and terminates the process.

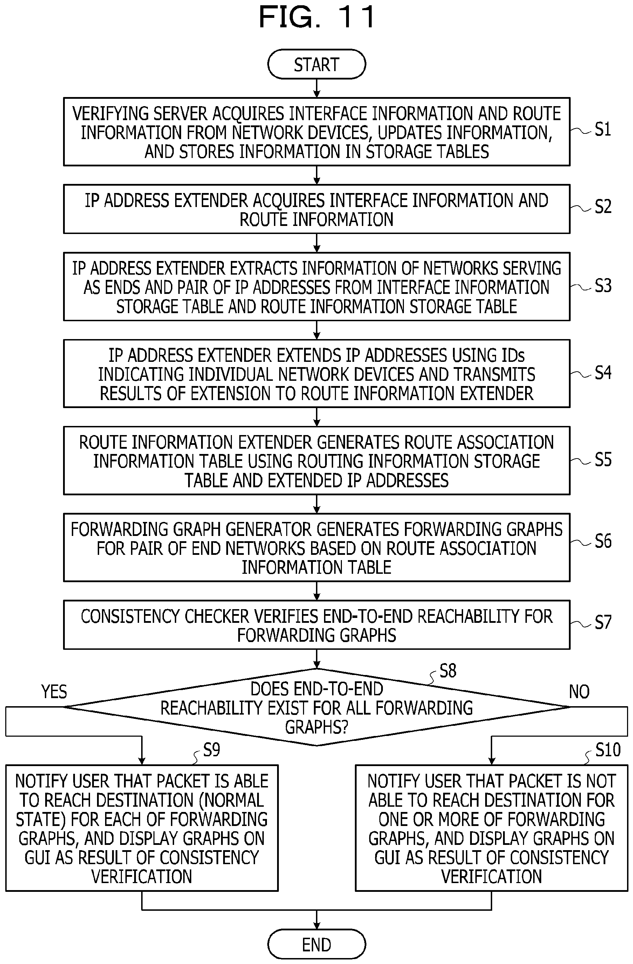

A process to be executed by the verifying server 10 of the network management system 1 as the example of the embodiment is described with reference to a flowchart (steps S1 to S10) illustrated in FIG. 11.

In step S1, the device setting collector 101 of the verifying server 10 acquires the interface information and the route information from the network devices 20. The device setting collector 101 causes the acquired route information to be stored in the route information table DB 107 and causes the acquired interface information to be stored in the IF/network device ID DB 108.

In step S2, the IP address extender 102 acquires the routing information storage table 1071 and the information of the FIBs of the network devices 20 from the route information table DB 107. The IP address extender 102 acquires the interface information storage table 1081, the setting information of the VTEPs, and the like from the IF/network device ID DB 108.

In step S3, the IP address extender 102 extracts information of the networks serving as ends in the network 50 and a pair of IP addresses of the end networks based on the interface information storage table 1081 and the routing information storage table 1071.

In step S4, the IP address extender 102 generates the extended IP address information by extending the IP addresses of the network devices 20 using the IDs specific to the network devices 20. The IP address extender 102 transmits the generated extended IP address information to the route information extender 103.

In step S5, the route information extender 103 generates the route association information storage table 110 based on the routing information storage table 1071 and the extended IP address information.

In step S6, the forwarding graph generator 104 generates forwarding graphs for the pair of end networks based on the route association information storage table 110.

In step S7, the consistency checker 105 verifies end-to-end reachability for each of the forwarding graphs.

In step S8, the user communicator 106 checks whether the end-to-end reachability exists for each of all the forwarding graphs. When the end-to-end reachability exists for each of all the forwarding graphs as a result of the checking, the process proceeds to step S9. In step S9, the consistency checker 105 notifies the user via the user communicator 106 that a packet is able to reach a destination for each of the forwarding graphs (normal state) as a result of the consistency verification. The forwarding graphs are displayed in a GUI on the monitor 14a.

On the other hand, when end-to-end reachability does not exist for one or more of the forwarding graphs as a result of the checking (No in step S8), the process proceeds to step S10.

In step S10, the consistency checker 105 notifies the user via the user communicator 106 that a packet is not able to reach a destination for the one or more of the forwarding graphs (abnormal state) as a result of the consistency verification. The forwarding graphs are displayed in a GUI on the monitor 14a. After that, the process is terminated.

### (C) Effects

In the network management system 1 as the example of the embodiment, the IP address extender 102 generates the extended IP address information by extending the IP addresses of the network devices 20 using the IDs specific to the network devices 20.

For example, in a state in which the same IP address that is an anycast VTEP IP address is set in different network devices 20, the network devices 20 in which the same IP address has been set may be distinguished by using the extended IP address information. Therefore, a forwarding graph may be generated using, as individual devices, the network devices 20 in which the same IP address has been set.

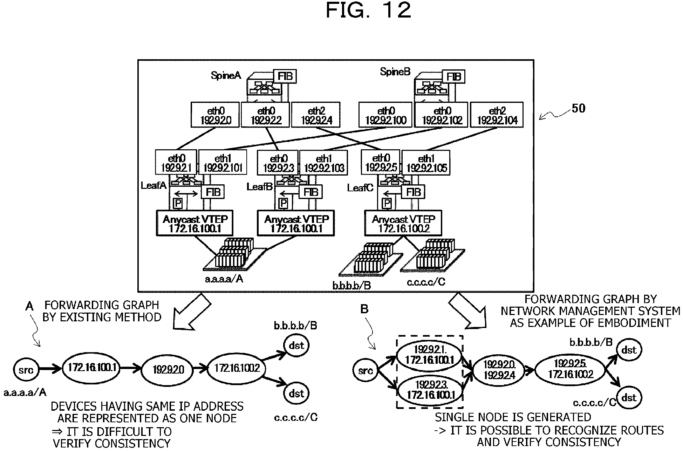

FIG. 12 is a diagram describing effects of the network management system 1 as the example of the embodiment.

In FIG. 12, reference sign A indicates a forwarding graph generated by an existing method, and reference sign B indicates a forwarding graph generated by the network management system 1.

In a network 50 exemplified in FIG. 12, the anycast VTEP IP address "172.16.100.1" is set in the leaf switch 20b-1 (Leaf A) and the leaf switch 20b-2 (Leaf B). The anycast VTEP IP address "172.16.100.2" is set in the leaf switch 20b-3 (Leaf C) and the leaf switch 20b-4 (Leaf D).

When the forwarding graph is generated by the existing method for the network 50, the leaf switch 20b-1 (Leaf A) and the leaf switch 20b-2 (Leaf B) may not be distinguished, as indicated by reference sign A. For example, in the forwarding graph generated by the existing method, the devices having the same IP address are represented as one node and it is difficult to verify consistency for each route.

On the other hand, the network management system 1 may use the extended IP address information to treat the leaf switches 20b-1 (Leaf A) and 20b-2 (Leaf B) having the same anycast VTEP IP address as different nodes in the forwarding graph, as indicated by reference sign B. The network management system 1 may treat a route extending via Leaf A and a route extending via Leaf B as different routes and verify consistency after recognizing the routes.

The route information extender 103 generates the route association information storage table 110. The forwarding graph generator 104 may reference the route association information storage table 110 and easily recognize the leaf switches 20b-1 (Leaf A) and 20b-2 (Leaf B) having the same anycast VTEP IP address.

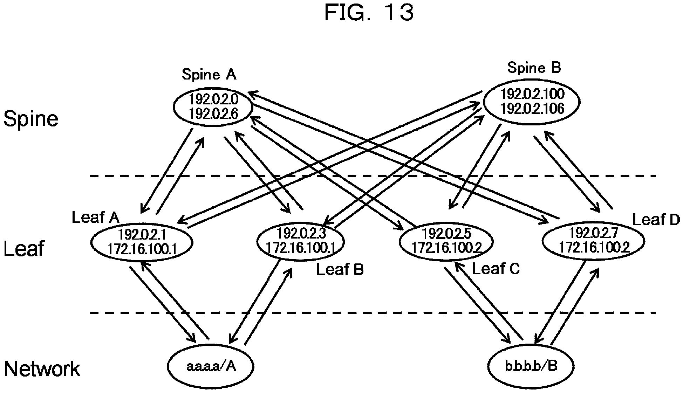

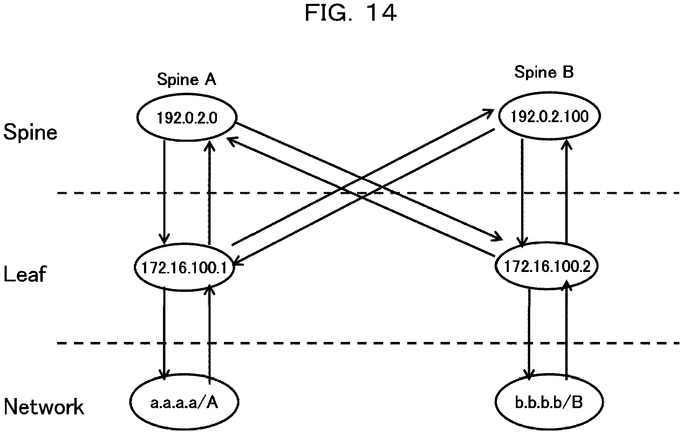

FIG. 13 illustrates an example in which consistency is verified for the forwarding graph generated by the existing method. FIG. 14 illustrates an example in which the consistency checker 105 verifies consistency for the forwarding graph generated by the network management system 1.

As illustrated in FIG. 13, the existing method is not able to distinguish between Leaf A and Leaf B, distinguish between Leaf C and Leaf D, and reflect the distinguishing in the forwarding graph. Therefore, the consistency of routes may not be appropriately verified.

On the other hand, as illustrated in FIG. 14, the network management system 1 may use the extended IP address information to independently recognize Leaf A and Leaf B in which the same anycast VTEP IP address has been set, independently recognize Leaf C and Leaf D in which the same anycast VTEP IP address has been set, and reflect the recognition in the forwarding graph. Therefore, the consistency of routes may be appropriately verified.

### (D) Others

FIG. 15 is a diagram illustrating a hardware configuration of the verifying server 10 as an example of the embodiment.

The verifying server 10 is an information processing device (computer) having server functions. For example, the verifying server 10 includes a processor 11, a memory 12, a storage device 13, a graphic processing device 14, an input interface 15, an optical drive device 16, a device coupling interface 17, and a network interface 18 as constituent components. The constituent components 11 to 18 may communicate with each other via a bus 19.

The processor (processing unit) 11 controls the entire verifying server 10. The processor 11 may be a multiprocessor. For example, the processor 11 may be any one of a CPU, a microprocessor unit (MPU), a digital signal processor (DSP), an application-specific integrated circuit (ASIC), a programmable logic device (PLD), and a field-programmable gate array (FPGA). The processor 11 may be a combination of two or more of the CPU, the MPU, the DSP, the ASIC, the PLD, and the FPGA.

The processor 11 executes a program (network management program not illustrated) for controlling the verifying server 10, thereby achieving the functions as the device setting collector 101, the IP address extender 102, the route information extender 103, the forwarding graph generator 104, the consistency checker 105, the user communicator 106, the route information table DB 107, the route association information storage section 109, and the IF/network device ID DB 108, which are exemplified in FIG. 1.

For example, the verifying server 10 executes the program (network management program) stored in a computer-readable non-transitory recording medium and a program (OS program) stored in the computer-readable non-transitory medium, thereby achieving the functions as the device setting collector 101, the IP address extender 102, the route information extender 103, the forwarding graph generator 104, the consistency checker 105, the user communicator 106, the route information table DB 107, the route association information storage section 109, and the IF/network device ID DB 108.

A program describing the details of the processes to be executed by the verifying server 10 may be stored in various recording media. For example, the programs to be executed by the verifying server 10 may be stored in the storage device 13. The processor 11 loads a part or all of the programs stored in the storage device 13 into the memory (RAM) 12 and executes the loaded part of the programs or all the loaded programs.

The programs to be executed by the verifying server 10 (processor 11) may be stored in a non-transitory portable recording medium, such as an optical disc 16a, a memory device 17a, or a memory card 17c. The programs stored in the portable recording medium may be installed in the storage device 13 and executed under control by the processor 11. The processor 11 may read the programs directly from the portable recording medium and execute the programs.

The memory 12 is a storage memory including a read-only memory (ROM) and a random-access memory (RAM). The RAM of the memory 12 is used as a main storage device of the verifying server 10. In the RAM, a part or all of the OS program to be executed by the processor 11 and the control program to be executed by the processor 11 is or are temporarily stored. In the memory 12, various data to be used for the processes by the processor 11 is stored.

The storage device 13 is a hard disk drive (HDD), a solid-state drive (SSD), a storage class memory (SCM), or the like and stores various data. The storage device 13 is used as an auxiliary storage device of the verifying server 10. In the storage device 13, the OS program, the control program, and various data are stored. The control program includes monitoring software.

As the auxiliary storage device, a semiconductor storage device, such as the SCM or a flash memory, may be used. A plurality of storage devices 13 may be used and constitute redundant arrays of inexpensive disks (RAID).

In the storage device 13, data constituting the route information table DB 107, the route association information storage section 109, and the IF/network device ID DB 108 is stored. In the memory 12 or the storage device 13, data constituting the route association information storage table 110 is stored. Therefore, the memory 12 or the storage device 13 functions as the route association information storage section 109.

The monitor 14a is coupled to the graphic processing device 14. The graphic processing device 14 displays an image on a screen of the monitor 14a in accordance with an instruction from the processor 11. Examples of the monitor 14a are a display device with a cathode ray tube (CRT) and a liquid display device.

The keyboard 15a and the mouse 15b are coupled to the input interface 15. The input interface 15 transmits signals transmitted from the keyboard 15a and the mouse 15b to the processor 11. The mouse 15b is an example of a pointing device. Another pointing device may be used. Examples of the other pointing device are a touch panel, a tablet, a touch pad, and a track ball.

The optical drive device 16 reads data recorded in the optical disc 16a using laser light or the like. The optical disc 16a is a portable non-transitory recording medium in which data is recorded so that the data is readable using light reflection. Examples of the optical disc 16a are a digital versatile disc (DVD), a DVD-RAM, a compact disc read-only memory (CD-ROM), a CD-recordable (R), and a CD-rewritable (RW).

The device coupling interface 17 is a communication interface for coupling peripheral devices to the verifying server 10. For example, the device coupling interface 17 may be coupled to the memory device 17a and a memory reader-writer 17b. The memory device 17a is a non-transitory recording medium having a function of communicating with the device coupling interface 17 and is, for example, a Universal Serial Bus (USB) memory. The memory reader-writer 17b writes data to the memory card 17c or reads data from the memory card 17c. The memory card 17c is a card-type non-transitory recording medium.

The network interface 18 is coupled to the network. The network interface 18 transmits and receives data to and from the network devices 20 via the network. Other information processing devices, communication devices, and the like may be coupled to the network.

The techniques disclosed herein are not limited to the aforementioned embodiment, and may be implemented by making various modifications thereto without departing from the gist of the embodiment. Each of the configurations described in the embodiment may be selected or omitted as appropriate or may be appropriately combined with another one or more of the configurations described in the embodiment. Each of the processes described in the embodiment may be selected or omitted as appropriate or may be appropriately combined with another one or more of the processes described in the embodiment.

For example, the network exemplified in FIG. 2 includes the end networks 20a-1 and 20a-2, the leaf switches 20b-1 to 20b-4, and the spine switches 20c-1 and 20c-2, but is not limited to this. The number of end networks 20a may be 3 or more. The number of spine switches 20c may be 1 or may be 3 or more. The number of leaf switches 20b may be 3 or less or may be 5 or more. The network exemplified in FIG. 2 may include a network device other than the end networks 20a, the spine switches 20c, and the leaf switches 20b.

In the foregoing embodiment, the extended IP address information is configured by arranging the IP addresses of the network devices 20 so that the IP addresses of the network devices 20 succeed the IP addresses given to the interfaces specific to the network devices 20 via periods, but is not limited to this.

For example, the IP addresses of the network devices 20 may be arranged so that the IP addresses of the network devices 20 precede the IP addresses given to the interfaces specific to the network devices 20. Instead of the periods, values may be arranged between the IP addresses of the network devices 20 and the IP addresses given to the interfaces specific to the network devices 20. For example, the format of the extended IP address information may be variously changed.

In the foregoing embodiment, the single verifying server 10 has the functions as the device setting collector 101, the IP address extender 102, the route information extender 103, the forwarding graph generator 104, the consistency checker 105, the user communicator 106, the route information table DB 107, the route association information storage section 109, and the IF/network device ID DB 108, but is not limited to this. The functions may be distributed in two or more information processing devices configured to communicate with each other.

The foregoing embodiment describes the example in which the IDs specific to the network devices 20 are the IP addresses set in the primary interfaces among the plurality of interfaces included in the network devices 20. The embodiment, however, is not limited to this. For example, the IDs specific to the network devices 20 may be media access control (MAC) addresses set in the primary interfaces among the plurality of interfaces included in the network devices 20. The IDs specific to the network devices 20 may be unique host names set in the network devices 20. The IDs specific to the network devices 20 may be variously changed.

The foregoing disclosure enables a person skilled in the art to implement and manufacture the embodiment.

## Claims

1. A diagram generation method executed by a computer comprising:
acquiring, from each of a plurality of communication devices, device information including identification information set in a first network interface existing on a first network;
identifying an internet protocol (IP) address set in a second network interface existing in a second network, the second network interface being included in a communication device which acquires the device information;
store, in a memory, linked information in which the acquired device information and the IP address are associated with each other; and
generating a network configuration diagram in which each of the plurality of communication devices sharing the IP address is an individual communication device by using the linked information.

2. The diagram generation method according to claim 1, further comprising:
identifying an extended internet protocol address information obtained by adding the identification information to the IP address; and
generating the network configuration diagram by using the extended internet protocol address information.

3. The diagram generation method according to claim 1, wherein two or more second network interfaces which exist on the second network have same IP address.

4. The diagram generation method according to claim 1, wherein
the device information includes setting information of a routing table and the identification information, and
the generating process includes generating the network configuration diagram by using the setting information and the IP address.

5. A diagram generation program that causes a computer to execute a process, the process comprising:
acquiring, from each of a plurality of communication devices, device information including identification information set in a first network interface existing on a first network;
identifying an internet protocol (IP) address set in a second network interface existing in a second network, the second network interface being included in a communication device which acquires the device information;
store, in a memory, linked information in which the acquired device information and the IP address are associated with each other; and
generating a network configuration diagram in which each of the plurality of communication devices sharing the IP address is an individual communication device by using the linked information.

6. The diagram generation program according to claim 5, wherein the process further comprising:
identifying an extended internet protocol address information obtained by adding the identification information to the IP address; and
generating the network configuration diagram by using the extended internet protocol address information.

7. The diagram generation program according to claim 5, wherein
two or more second network interfaces which exist on the second network have same IP address.

8. The diagram generation program according to claim 5, wherein the process further comprising:
the device information includes setting information of a routing table and the identification information, and
the generating process includes generating the network configuration diagram by using the setting information and the IP address.
